(19) Europäisches Patentamt
European Patent Office
Office européen des brevets

(11) EP 3 807 619 B1

(12) EUROPÄISCHE PATENTSCHRIFT

(45) Veröffentlichungstag und Bekanntmachung des Hinweises auf die Patenterteilung:
03.12.2025 Patentblatt 2025/49

(21) Anmeldenummer: 19819614.9

(22) Anmeldetag: 12.06.2019

(51) Internationale Patentklassifikation (IPC):
G01N 21/15 (2006.01)    G01N 21/64 (2006.01)
G02B 21/00 (2006.01)    G01B 11/24 (2006.01)
G01N 21/88 (2006.01)    G02B 5/00 (2006.01)

(52) Gemeinsame Patentklassifikation (CPC):
G01B 11/24; G01N 21/6456; G01N 21/8806;
G02B 5/003; G02B 5/005; G02B 21/0044

(86) Internationale Anmeldenummer:
PCT/IB2019/054916

(87) Internationale Veröffentlichungsnummer:
WO 2019/239347 (19.12.2019 Gazette 2019/51)

## (54) LOCHSCHEIBE ZUM SELEKTIEREN VON LICHT FÜR EINE OPTISCHE ABBILDUNG

PERFORATED DISK FOR SELECTING LIGHT FOR OPTICAL IMAGING

DISQUE PERFORÉ POUR LA SÉLECTION DE LUMIÈRE POUR UNE REPRODUCTION OPTIQUE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 13.06.2018 DE 102018114162

(43) Veröffentlichungstag der Anmeldung:
21.04.2021 Patentblatt 2021/16

(73) Patentinhaber: Solarius GmbH
80636 München (DE)

(72) Erfinder:
• JANSEN, Dennis Frank
  46045 Oberhausen (DE)
• STIEGER, Benjamin
  44137 Dortmund (DE)

(74) Vertreter: Manitz Finsterwald
Patent- und Rechtsanwaltspartnerschaft mbB
Martin-Greif-Straße 1
80336 München (DE)

(56) Entgegenhaltungen:
EP-A1- 1 806 601          WO-A1-2015/000764
WO-A1-2017/064629      CN-A- 101 532 958
CN-A- 103 063 145       CN-A- 106 324 819
CN-U- 202 748 306       DE-A1- 10 014 331
DE-A1- 102013 201 857   JP-A- H11 218 677
US-A1- 2009 323 152

EP 3 807 619 B1

## Beschreibung

Technisches Gebiet

Die vorliegende Erfindung betrifft allgemein das technische Gebiet der optischen Abbildungen mittels Lochblenden. Die vorliegende Erfindung betrifft insbesondere eine (drehbare) Lochscheibe mit einer Mehrzahl von Aussparungen und optischen Durchgängen, welche als kleine Lochblenden in den Strahlengang eines optischen Abbildungssystems eingebracht werden können. Ferner betrifft die vorliegende Erfindung ein optisches Abbildungssystem mit einer solchen Lochscheibe.

Hintergrund der Erfindung

Im Bereich der optischen Bildübertragung werden regelmäßig rotierende Lochscheiben verwendet, um in einer genau definierten Abstandsebene eine scharfe Abbildung zu ermöglichen. Solche Lochscheiben sind beispielsweise sog. "Nipkow-Scheiben" oder sog. "Multi-Pinhole-Disks". Um eine dreidimensionale Abbildung einer Oberfläche zu ermöglichen, müssen zunächst einzelne Oberflächenschichten physikalisch separiert voneinander aufgenommen werden, welche dann über Datenverarbeitungsmaßnahmen zu 3D Oberflächentopographien zusammengesetzt werden. Unterschiedliche Oberflächenschichten können dabei mittels einer geeigneten Veränderung des Abstandes zwischen einem optisch zu erfassenden Objekt und zumindest einem Teil eines entsprechenden optischen Messsystems erfasst werden, wobei eine Lochscheibe eine Komponente eines optischen Abbildungssystems dieses Messsystems darstellt.

In konfokal arbeitenden 2D- und 3D-Mikroskopen dienen Lochscheiben dazu, das von der zu erfassenden Oberfläche reflektierte Licht im Sinne einer dynamischen Apertur auszublenden, welches sich nicht innerhalb eines definierten Fokusbereiches des Abbildungssystems befindet. Durch eine solche räumliche Filterung des reflektierten Lichts lassen sich definierte Schnittbilder einer Oberfläche erzeugen, die zu einer 3D Oberflächentopographie zusammengefügt werden können.

Lochscheiben werden üblicherweise aus einem optisch transparenten Material wie beispielsweise Glas gefertigt, das mit einer reflektierenden Schicht überzogen wird. In der reflektierenden Schicht befinden sich Öffnungen, die jeweils eine Lochblende darstellen. Diese reflektierende Schicht verursacht dabei regelmäßig Störlicht, welches von der Lochscheibe selbst und nicht von dem zu untersuchenden Objekt zurückgestrahlt wird und auf einen Lichtdetektor trifft, welcher das sog. Nutzlicht erfasst. Das Nutzlicht ist dabei dasjenige Licht, welches von dem zu untersuchenden Objekt zurückgestrahlt wird und ausgewertet werden soll. In ungünstigen Fällen kann das Störlicht um Größenordnungen intensiver sein als das Nutzlicht. Dann wird es schwer oder sogar unmöglich, die Oberfläche des zu untersuchenden Objekts mit einer akzeptablen Genauigkeit zu erfassen. Zudem stellt eine Lochscheibe aus einem optisch transparenten Material im Strahlengang eine planparallele Platte dar, welche für alle nicht senkrecht einfallenden Strahlen zu einem optischen Versatz und damit zu geometrischen Abbildungsfehlern führt. Ferner treten (aufgrund einer Dispersion des optisch transparenten Materials) auch chromatische Abbildungsfehler auf. Darüber hinaus entstehen auch am optisch transparenten Material selbst Reflexe, sodass die Transmission durch eine solche Lochscheibe unterhalb von 100% liegt, weil infolge einer derartigen Reflexion Lichtintensität verloren geht.

Die Öffnungen der Lochblenden werden in der Regel auf konzentrischen Kreisen angeordnet, wobei deren polarer Winkel einer statistischen Verteilung unterliegt wie beispielsweise in WO 2007 121706 A1 beschrieben. Alternativ können die Öffnungen auf logarithmischen Spiralen räumlich verteilt angeordnet sein, wobei sich ein Koordinatenursprung der Verteilung in der Mitte der Lochscheibe befindet. Eine Anordnung der Öffnungen auf konzentrischen Kreisen führt jedoch zu sichtbaren Ringen in der optischen Abbildung, eine Anordnung auf logarithmischen Spiralen erzeugt eine zum Bildrand hin abfallende Lichtintensität.

Um unerwünschte Reflektionen an der Lochscheibe zu vermeiden, welche das Nutzlicht überstrahlen können, greift man regelmäßig auf zwei Ansätze zurück.

(A) Ein erster Ansatz besteht darin, die Lochscheibe um einen Winkel, der sich ausreichend von 90° unterscheidet, im optischen Strahlengang zu verkippen. Dann "nimmt" das reflektierte Störlicht einen anderen Weg als das Nutzlicht und kann aus dem Strahlengang ausgekoppelt werden. Eine unerwünschte Folge eines solchen Verkippens besteht darin, dass in Konsequenz alle optischen Elemente in dem entsprechenden Abbildungssystem schräg gestellt werden müssen, was wiederum eine Asymmetrie der optischen Abbildung zur Folge hat und daher zu weiteren geometrischen und chromatischen Abbildungsfehlern führt.

(B) Ein zweiter Ansatz besteht darin, alternativ oder in Kombination zu dem ersten Ansatz eine sog. Polarisationsoptik zur Reflexverringerung zu verwenden. Dabei wird das Licht derart polarisiert, dass die Polarisation der Reflexe von der der Lochscheibe senkrecht zu der Polarisation des Nutzlichtes steht, das von der zu vermessenden Oberfläche in das Abbildungssystem zurückstrahlt und von einem Lichtdetektor erfasst wird. Mittels eines Polarisationsfilters können Bestandteile des Störlichts ausgeblendet werden, welches aus den Rückreflexen an der Lochscheibe stammt. Dieser polarisationsbasierte Ansatz ist in seiner Wirkung jedoch begrenzt, da er voraussetzt, dass die gesamte Abbildung polarisationserhaltend ist. Da diese Annahme nicht vollständig zutrifft, kann das Störlicht nur zu einem Teil ausgeblendet werden.

Eine bekannte Lochscheibe mit einer absorbierenden Beschichtung ist aus der Druckschrift WO 2017/064629 A1 bekannt.

Der Erfindung liegt die Aufgabe zugrunde, eine Lochscheibe zu schaffen, welche bei optischen Abbildungen nicht zu Abbildungsfehlern führt und durch Reflexionen und/oder Streuungen an der Lochscheibe erzeugtes Störlicht vermeidet.

Zusammenfassung der Erfindung

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird beschrieben eine Lochscheibe zum Selektieren von Licht für eine optische Abbildung, insbesondere für eine optische Abbildung in einem konfokalen Abbildungssystem. Die beschriebene Lochscheibe weist auf ein optisch absorbierendes Material, welches einen Absorptionskoeffizienten von zumindest 98 % hat, wobei in dem optisch absorbierenden Material zumindest eine Aussparung vorhanden ist, welche einen optischen Durchgang durch die Lochscheibe definiert.

Der beschriebenen Lochscheibe liegt die Erkenntnis zugrunde, dass durch die Verwendung eines Materials mit einem sehr hohen Absorptionskoeffizienten unerwünschte Reflexionen an der Oberfläche der Lochscheibe (außerhalb der Aussparung) weitgehend vermindert werden können. Damit können auf effektive Weise die vorstehend beschriebenen Nachteile von bekannten Lochscheiben vermieden werden. Insbesondere wird das außerhalb der zumindest einen Aussparung auf die Lochscheibe auftreffende Licht so stark absorbiert, dass eine Schrägstellung der Lochscheibe und/oder der Einsatz von Polarisationsoptiken zur Vermeidung von Störlicht nicht erforderlich ist, weil nur extrem wenig Licht an der Oberfläche des Materials (zurück) reflektiert bzw. zurückgestreut wird. Dabei bezieht sich der Ausdruck "wenig Licht" auf die Intensität des nicht absorbierten Lichts bzw. der nicht absorbierten Lichtstrahlung.

Erfindungsgemäß wird also der überwiegende Teil des auf die Lochscheibe (außerhalb der Aussparung) auftreffenden Lichts absorbiert. Dies bedeutet, dass der nicht absorbierte Teil entweder das optisch absorbierende Material durchdringt (transmittiert) und/oder an der Oberfläche des Materials (zurück) gestreut wird. Da eine Transmission von Licht (außerhalb der Aussparung) für die meisten optischen Abbildungen noch schädlicher ist als eine Rückreflexion bzw. Rückstreuung, kann bevorzugt dafür gesorgt werden, dass der Transmissionskoeffizient des optisch absorbierenden Materials möglichst gering ist. Ein Transmissionskoeffizient von zumindest annähernd Null kann auf einfache Weise dadurch erreicht werden, wenn das optisch absorbierende Material eine ausreichende (Schicht)Dicke hat.

Die vorstehend beschriebenen physikalischen Parameter Absorptionskoeffizient A und Transmissionskoeffizient T sowie ein Reflexions- bzw. Rückstreukoeffizient R beziehen sich allesamt auf die Intensität der entsprechenden Lichtanteile. In bekannter Weise gilt aufgrund des physikalischen Gesetzes der Energieerhaltung folgender Zusammenhang:

$$A + R + T = 1$$

Bei den meisten Anwendungen muss die beschriebene Lochscheibe in den Strahlengang eines Beleuchtungslichts und/oder eines Messlichts gebracht und dort derart rotiert werden, dass die zumindest eine Aussparung jeweils für kurze Zeit einzelne Lichtstrahlen passieren lässt. Zum Zwecke eines definierten Drehens kann die Lochscheibe deshalb einen Schaft aufweisen oder an einem Schaft angebracht sein und/oder eine Zentralöffnung aufweisen, welche an einem drehbaren Schaft fixiert werden kann. Der Schaft bzw. die Öffnung befindet sich bevorzugt genau in der Mitte der Lochscheibe, sodass diese unter Verwendung eines geeigneten Antriebssystems ohne eine mechanische Unwucht um eine definierte Drehachse gedreht bzw. rotiert werden kann, sodass nacheinander unterschiedliche Durchgänge in den Strahlengang eines optischen Abbildungssystems gelangen und jeweils für eine kurze Zeit lediglich bestimmte Lichtstrahlen eines Strahlenbündel passieren lassen (und andere Lichtstrahlen des Strahlenbündels mittels Absorption blocken).

Bevorzugt weist die Lochscheibe eine Mehrzahl von Aussparungen auf, von denen zumindest einige in einem unterschiedlichen radialen Abstand von einer Mitte der Lochscheibe angeordnet sind. Damit kann ein zu erfassendes Objekt durch eine Rotation der Lochscheibe in bekannter Weise nicht nur entlang einer (gekrümmten) Linie, sondern in einem zweidimensionalen Bereich an mehreren Messpunkten erfasst werden.

In diesem Dokument bezeichnet der Ausdruck "Beleuchtungslicht" diejenigen Lichtstrahlen, welche ausgehend von einer Lichtquelle direkt oder indirekt (über zumindest ein weiteres optisches Element wie beispielsweise eine Linse oder einen Spiegel) auf das zu erfassende Objekt treffen. Im Gegensatz dazu wird in diesem Dokument der Ausdruck "Messlicht" für diejenigen Lichtstrahlen verwendet, welche von dem zu erfassenden Objekt zurückgestreut werden und direkt oder indirekt auf einen geeigneten Lichtdetektor treffen.

Erfindungsgemäß weist die Lochscheibe ferner auf ein Substrat, wobei das optisch absorbierende Material eine Beschichtung auf dem Substrat ist. Dies hat den Vorteil, dass das optisch absorbierende Material auf einfache Weise in einer geeigneten räumlich körperlichen Struktur realisiert werden kann. Die Beschichtung kann beispielsweise mittels einer geeigneten chemischen und/oder physikalischen Gasphasenabscheidung erzeugt werden.

Gemäß einem weiteren Ausführungsbeispiel der Erfindung ist das Substrat ein optisch transparentes Substrat.

Ein optisch transparentes Substrat als Basismaterial für eine darauf aufgebrachte Beschichtung kann insbesondere bei der Herstellung der beschriebenen Lochscheibe von Vorteil sein. Die zumindest eine Aussparung in dem optisch absorbierenden Material kann während einer Aufbringung der Beschichtung durch zumindest eine geeignete Abdeckungsstruktur realisiert werden, welche dafür sorgt, dass sich an der betreffenden Stelle kein optisch absorbierendes Material abschneidet.

In diesem Zusammenhang kann optisch transparent eine Durchlässigkeit für eine oder mehrere Wellenlängen eines Lichtspektrums bedeuten, wobei dieses Lichtspektrum nicht zwangsläufig auf das für das menschliche Auge sichtbare Lichtspektrum beschränkt ist. Insbesondere kann das optisch transparente Substrat alternativ oder in Kombination zu einer Durchlässigkeit von sichtbarem Licht auch für Infrarotstrahlung und/oder Ultraviolettstrahlung durchsichtig sein. Gemäß einem weiteren Ausführungsbeispiel der Erfindung weist das Substrat ein Halbleitermaterial auf.

Die Verwendung eines Halbleitermaterials kann insbesondere für solche Lochscheiben von großem Vorteil sein, welche für eine hohe optische Abbildungsgenauigkeit hochpräzise gefertigt werden müssen. Dabei kann das Halbleitermaterial beispielsweise aus einem Wafer stammen, welcher üblicherweise für eine Herstellung von Halbleiterbauelementen verwendet wird.

Gemäß einem weiteren Ausführungsbeispiel der Erfindung ist das Halbleitermaterial Silizium. Dies hat den Vorteil, dass das Substrat besonderes kostengünstig hergestellt werden und/oder von einem Hersteller der Lochscheibe erworben werden kann. Silizium ist nämlich ein Material, welches auch in vielen anderen Anwendungsfällen insbesondere im Bereich der Elektronikfertigung verwendet wird und somit weit verbreitet und in hoher Qualität verfügbar ist.

Erfindungsgemäß weist das Substrat im Bereich der zumindest einen Aussparung eine Durchgangsöffnung auf.

Eine Durchgangsöffnung ist insbesondere bei solchen Substraten von Vorteil oder eventuell sogar erforderlich, welche ein optisch zumindest teilweise absorbierendes Substrat(Material) aufweisen. Eine Durchgangsöffnung kann jedoch auch bei optisch perfekt durchlässigen Substratmaterialien sinnvoll sein, weil auch optisch zu 100 % durchlässige Substratmaterialien an der Grenzfläche zwischen Luft und Substrat aufgrund der Unterschiede der Brechungsindizes von Luft und Substratmaterial selbst bei einem senkrechten Lichteinfall einen in der Praxis nicht zu vernachlässigenden Reflexionskoeffizienten zeigen.

Gemäß einem weiteren Ausführungsbeispiel der Erfindung weist die Durchgangsöffnung entlang einer Richtung parallel zu einem Normalenvektor der Lochscheibe einen sich stetig oder diskret bzw. stufenförmig verändernden Öffnungsquerschnitt auf. Dabei definiert die beschriebene Richtung insbesondere eine Dicke der Lochscheibe bzw. des Lochscheibensubstrats.

Die beschriebene kontinuierliche Änderung des Öffnungsquerschnitts kann insbesondere so stark sein, dass zumindest eine Seitenwand der Durchgangsöffnung gegenüber der Oberfläche der Lochscheibe so stark geneigt ist, dass an dieser Seitenwand keine unerwünschten Beschneidungen (Vignettierungen), Reflexionen oder Streuungen von Lichtstrahlen stattfinden, welche die entsprechende Aussparung der Lochscheibe passieren. Da auch solche "Seitenwandstreuungen" einen nicht unwesentlichen Beitrag zu Störlicht leisten können, kann durch geeignete Durchgangsöffnungen, die von einer reinen Zylinderform abweichen, die optische Qualität der Lochscheibe verbessert werden.

Gemäß einem weiteren Ausführungsbeispiel der Erfindung weist die Durchgangsöffnung die Form eines Kegelstumpfes auf. Eine Ausbildung der (zumindest einen) Durchgangsöffnung in Form eines Kegelstumpfes hat den Vorteil, dass die Durchgangsöffnung auf einfache Weise mit hoher Genauigkeit in das Substrat eingebracht bzw. in dem Substrat ausgebildet werden kann.

Bevorzugt können insbesondere kegelstumpfförmige bzw. konusförmige Durchgangsöffnungen mittels Laserbohrens ausgebildet werden. Alternativ oder in Kombination können auch Ätzverfahren, die beispielsweise aus der Halbleitertechnik bekannt sind, für eine Realisierung der zumindest einen Durchgangsöffnung verwendet werden.

Gemäß einem weiteren Ausführungsbeispiel der Erfindung hat die zumindest eine Aussparung eine Breite zwischen 1 $\mu$m und 30 $\mu$m und insbesondere eine Breite zwischen 2 $\mu$m und 10 $\mu$m hat (1 $\mu$m = $10^{-6}$ m). Derartig räumlich dimensionierte Aussparungen sind insbesondere für optische Messsysteme von Vorteil, welche im sichtbaren und/oder infraroten Spektralbereich arbeiten. Der Vorteil der beschriebenen räumlichen Dimensionierung besteht dabei insbesondere darin, dass die Aussparungen so groß sind, dass unerwünschte Beugungseffekte annähernd vollständig vermieden werden können. Außerdem kann durch geeignete dimensionierte Aussparungen ein guter Kompromiss gefunden werden zwischen (a) einer räumlichen Auflösung der Lichtstrahlenselektion und (b) einer ausreichend hohen Intensität an Licht, welches die betreffende Aussparung passieren bzw. durchdringen kann. Dabei kann sich die ausreichend hohe Lichtintensität sowohl auf ein Beleuchtungslicht als auch auf ein Messlicht beziehen.

Der verwendete Ausdruck "Breite der Aussparung" bezieht sich dabei insbesondere auf eine Richtung parallel zu der Oberfläche bzw. senkrecht zu dem Normalenvektor der Oberfläche der Lochscheibe. Ferner kann sich der Begriff "Breite" auf verschiedene Querschnittsformen beziehen. Im Falle eines kreisrunden Querschnitts bezieht sich der Ausdruck "Breite" auf den Durchmesser des betreffenden Kreises. Im Falle eines elliptischen Querschnitts bezieht sich der Ausdruck "Breite" entweder auf die kurze Halbachse oder auf die lange Halbachse der betreffenden Ellipse. Im Falle eines rechteckigen Querschnitts kann sich der Ausdruck "Breite" auf jede der Kantenlängen des betreffenden Rechtecks beziehen. Bei anderen Querschnittsformen, beispielsweise gebildet durch ein Polygon, gelten ähnliche oder entsprechende Überlegungen hinsichtlich der Bedeutung des Ausdrucks "Breite".

Gemäß einem weiteren Ausführungsbeispiel der Erfindung ist der Absorptionskoeffizient größer als 99%, insbesondere größer als 99,5% und weiter insbesondere größer als 99.95%.

Da mit einer steigenden Absorption die Intensität von Störlicht geringer wird, führt ein entsprechend hoher bzw. noch höherer Absorptionskoeffizient zu einer weiteren Verbesserung eines die beschriebene Lochscheibe aufweisenden Messsystems. Ein entsprechend hoher Absorptionskoeffizient kann beispielsweise durch ein schwarzes Material mit einer hohen Oberflächenrauheit realisiert werden. Ein solches Material enthält beispielsweise Kohlenstoff, welcher in Form von Ruß auf das Substrat der Lochscheibe aufgebracht wird.

Gemäß einem weiteren Ausführungsbeispiel der Erfindung weist das optisch absorbierende Material Kohlenstoff-Nanoröhren auf. Kohlenstoff-Nanoröhren können auf vorteilhafte Weise dazu verwendet werden, ein optisch absorbierendes Material mit einem besonders hohen Absorptionskoeffizienten zu realisieren.

Gemäß einem weiteren Ausführungsbeispiel der Erfindung sind (zumindest ein Großteil) die Kohlenstoff-Nanoröhren entlang einer Vorzugsrichtung ausgerichtet, wobei die Vorzugsrichtung insbesondere parallel zu einem Normalenvektor der Lochscheibe orientiert ist. Durch derartig orientierte Kohlenstoff-Nanoröhren kann der Absorptionskoeffizient des optisch absorbierenden Materials weiter erhöht werden.

Gemäß einem weiteren Ausführungsbeispiel der Erfindung weist die Lochscheibe ferner auf zumindest eine weitere Aussparung, wobei die weitere Aussparung einen weiteren optischen Durchgang definiert, welcher größer ist als der optische Durchgang, welcher von der vorstehend genannten und eingeführten Aussparung definiert ist.

Die verschieden großen optischen Durchgänge können statistisch oder gleichmäßig über zumindest einen größeren Teilbereich der Lochscheibe oder über die gesamte Lochscheibe verteilt sein. Alternativ können verschieden große optische Durchgänge unterschiedlichen Teilbereichen der Lochscheibe zugeordnet sein. Auf diese Weise kann die beschriebene Lochscheibe unterschiedliche räumliche Auflösungen für eine optische Abbildung bereitstellen.

Gemäß einem weiteren Ausführungsbeispiel der Erfindung sind eine Vielzahl von optischen Durchgängen vorhanden, die in Bezug auf einen Mittelpunkt der Lochscheibe unterschiedliche radiale Abstände haben, wobei (a) für einen ersten radialen Abstand zwei benachbarte erste optische Durchgänge in Bezug auf den Mittelpunkt einen ersten Winkelabstand haben und (b) für einen zweiten radialen Abstand zwei benachbarte zweite optische Durchgänge in Bezug auf den Mittelpunkt einen zweiten Winkelabstand haben. Wenn der erste Abstand größer ist als der zweite Abstand, dann ist der erste Winkelabstand kleiner als der zweite Winkelabstand.

Anschaulich ausgedrückt sind die vielen optischen Durchgänge nicht auf radial von dem Mittelpunkt nach außen bzw. sternförmig nach außen verlaufenden (Halb)Geraden angeordnet, wobei für alle Geraden gilt, dass ein Winkelabstand zwischen zwei jeweils benachbarten Geraden gleich ist. In solchen Fall wäre der Abstand zwischen zwei einander benachbarten optischen Durchgängen, welche zumindest annähernd den gleichen radialen Abstand vom Mittelpunkt haben, für größere radiale Abstände größer. Dies muss bei der hier beschriebenen Ausführungsform jedoch nicht der Fall sein, weil anschaulich ausgedrückt auf einer ersten Kreislinie um den Mittelpunkt mit einem ersten Radius eine größere Anzahl an optischen Durchgängen vorhanden ist als auf einer zweiten Kreislinie um den Mittelpunkt mit einem zweiten Radius, welcher kleiner ist als der erste Radius.

Mit dem Ausdruck "Winkelabstand" zwischen zwei einander benachbarten optischen Durchgängen mit einem gleichen radialen Abstand zum Mittelpunkt ist in diesem Dokument der Winkel gemeint, der zwischen (i) einer ersten (Halb)Geraden ausgehend von dem Mittelpunkt zu einem ersten der beiden optischen Durchgänge und (ii) einer zweiten (Halb)Geraden ausgehend von dem Mittelpunkt zu dem zweiten der beiden optischen Durchgänge eingeschlossen ist.

Die hier beschriebene "nicht sternförmige" räumliche Verteilung der optischen Durchgänge kann insbesondere den Vorteil haben, dass ohne eine Einbuße an räumlicher Auflösung für größere radiale Abstände während einer Umdrehung der Lochscheibe eine größere Menge an Licht "eingesammelt" wird, sodass von einem Lichtdetektor optische Messsignale mit einem großen Signal-zu-Rausch Verhältnis aufgenommen werden können.

Gemäß einem weiteren Ausführungsbeispiel der Erfindung sind die optischen Durchgänge derart räumlich über die Lochscheibe verteilt angeordnet, dass über ein vorgegebenes Sichtfeld der konfokalen optischen Abbildung ein zumindest annähernd gleiches Signal-zu-Rausch Verhältnis erzielbar ist. Dadurch kann die Fähigkeit eines optischen Abbildungssystems verbessert werden, Oberflächenbereiche des Objekts, welche voneinander abweichende Reflexionseigenschaften aufweisen, (quantitativ) mit hoher Zuverlässigkeit zu erfassen. Eine lokale Anpassung bzw. Veränderung der Beleuchtungsintensität ist dazu dann nicht erforderlich.

Zur Erzielung eines besonders gleichmäßigen Signal-zu-Rausch Verhältnisses kann die Anzahl an optischen Durchgängen, die sich in einem bestimmten radialen Abstand vom Mittelpunkt der Lochscheibe befinden, proportional zu diesem radialen Abstand sein. Dies kann bedeuten, dass bei einer konstanten Rotationsgeschwindigkeit der Lochscheibe die Häufigkeitsverteilung der optischen Durchgänge als Funktion des radialen Abstandes eine Gerade mit positiver Steigung ist.

Gemäß einem weiteren Ausführungsbeispiel der Erfindung weist die Lochscheibe ferner zumindest ein optisches Fenster auf, welches so groß ist, dass zumindest ein Teilbereich eines zu erfassenden Objekts durch das optische Fenster hindurch auf eine Kamera optisch abbildbar ist, wobei der abbildbare Teilbereich des Objekts größer ist als ein Bereich des Objekts, welcher durch den optischen Durchgang erfassbar ist.

Bevorzugt weist die Lochscheibe zwei oder mehrere solche optischen Fenster auf. Diese können derart auf der Lochscheibe angeordnet sein, dass bei einer ganzen Umdrehung der Lochscheibe die Sicht auf zumindest den Teilbereich des Objekts ohne eine Anwendung einer konfokalen Filterung (durch die optischen Durchgänge hindurch) freigegeben ist.

Bei einer ganzen Umdrehung der Lochscheibe erfolgt dann die Abbildung eines Objektbereiches sowohl durch mindestens einen optischen Durchgang auch durch ein optisches Fenster. Das optische Fenster ist entlang der Umfangsrichtung der Lochscheibe bevorzugt so breit, dass die Lichtmenge, die durch das optische Fenster auf einen Lichtdetektor trifft, größer oder gleich ist wie die Lichtmenge, die durch alle optischen Durchgänge auf den Lichtdetektor trifft. Dies betrifft diejenigen optischen Durchgänge, die sich in dem gleichen radialen Abstandsbereich bzw. der gleichen radialen Ausdehnung in Bezug auf den Mittelpunkt der Lochscheibe wie das optische Fenster befinden. In diesem Fall "überwiegt" die optische Abbildung durch das optische Fenster hindurch. Eine konfokale Filterung durch die betreffenden optischen Durchgänge erfolgt dann mit einer geringeren Lichtmenge.

Die zumindest zwei optischen Fenster können sich in Bezug auf einen Mittelpunkt der Lochscheibe, welcher mit einer Drehachse für die Lochscheibe zusammenfällt, auf gegenüberliegen Seiten befinden. Dabei kann die entsprechende räumliche Anordnung der Fenster so gewählt werden, dass eine Unwucht der Lochscheibe zumindest annähernd eliminiert ist. Weiter bevorzugt kann eine solche Unwucht dadurch minimiert werden, dass sich verschieden große Fenster an von dem Mittelpunkt radial unterschiedlich beabstandeten Positionen befinden.

Anschaulich ausgedrückt kann durch das optische Fenster hindurch ein herkömmliches Bild des zu erfassenden Objekts aufgenommen werden. Aus einem solchen Bild kann beispielsweise die Position des Objekts bestimmt werden, sodass verifiziert werden kann, dass bei einer eigentlichen 3D (Oberflächen)Vermessung des Objekts durch den zumindest einen optischen Durchgang hindurch auch tatsächlich das zu erfassende Objekt bzw. der tatsächlich zu erfassende Teilbereich des zu erfassenden Objekts vermessen wird.

Das beschriebene optische Fenster wird durch zumindest eine entsprechend große Lücke in dem optisch absorbierenden Material definiert. Abhängig von der optischen Durchlässigkeit eines Substratmaterials, auf welchem das optisch absorbierende Material aufgebracht ist, kann dem beschriebenen optischen Fenster auch noch eine entsprechend große Durchgangsöffnung in dem betreffenden Substrat zugeordnet sein.

Abhängig von der Form und der Größe des mittels der Kamera zu erfassenden (Teilbereiches des) Objektes kann das optische Fenster eine geeignete Geometrie bzw. Größe haben. Lediglich beispielhaft seien an dieser Stelle folgende Formen genannt: Rechteck, Schlitz, Kreis, Ellipse, Kreissektor, Kreisringsektor (der Lochscheibe).

Das beschriebene optische Fenster kann, in Bezug auf einen Mittelpunkt der Lochscheibe, im Vergleich zu dem zumindest einen optischen Durchgang und/oder im Vergleich zu dem zumindest einen weiteren optischen Durchgang radial versetzt angeordnet sein. Dadurch kann eine Erfassung zumindest eines Teilbereichs des zu erfassenden Objekts optisch getrennt von einer Erfassung einer 3D Oberflächentopographie (durch den zumindest einen optischen Durchgang und oder den zumindest einen weiteren optischen Durchgang hindurch) erfolgen. Alternativ oder in Kombination kann das zumindest eine optische Fenster auch entlang einer Umfangsrichtung gegenüber dem zumindest einem optischen Durchgang und/oder gegenüber dem zumindest einen weiteren optischen Durchgang versetzt angeordnet sein.

Gemäß einem weiteren Ausführungsbeispiel der Erfindung weist die Lochscheibe eine Vielzahl von Aussparungen und / oder optischen Durchgängen und zumindest drei unterschiedliche Kreissektoren auf, wobei (a) in einem ersten Kreissektor die Aussparungen mit einer ersten räumlichen Verteilung angeordnet sind, (b) in einem zweiten Kreissektor die Aussparungen mit einer zweiten räumlichen Verteilung angeordnet sind, und (c) in dem dritten Kreissektor die Aussparungen mit einer dritten räumlichen Verteilung angeordnet sind. Entlang einer Umfangsrichtung der Lochscheibe befindet sich der zweite Kreissektor zwischen dem ersten Kreissektor und dem dritten Kreissektor. Ferner sind die erste räumliche Verteilung und die dritte räumliche Verteilung unterschiedlich zu der zweiten räumlichen Verteilung. Bevorzugt ist die erste räumliche Verteilung gleich wie die dritte räumliche Verteilung. Durch eine derartige "Sektorisierung" kann auf vorteilhafte Weise die Homogenität der Ausleuchtung eines Lichtdetektors eines (konfokalen) optischen Abbildungssystems verbessert werden.

Die genannten Kreissektoren können auch als Kreisausschnitte bezeichnet werden.

In diesem Dokument und insbesondere in diesem Zusammenhang kann der Ausdruck "räumliche Verteilung" sich auf die Positionen und/oder die Anzahl, die Häufigkeit bzw. die Dichte (= Anzahl der Aussparungen und/oder optischen Durchgänge pro Flächeneinheit) der Aussparungen beziehen.

Es wird darauf hingewiesen, dass die Lochscheibe auch mehr als drei Sektoren aufweisen kann, wobei die Anzahl der Sektoren insbesondere ein Vielfaches von Drei sein kann. Er wird ferner darauf hingewiesen, dass für den Fall, dass die Lochscheibe, wie vorstehend beschrieben, zumindest ein optisches Fenster aufweist, sich dieses optische Fenster bevorzugt in einem weiteren Kreissektor befindet, welcher unterschiedlich ist zu den genannten (zumindest drei) Kreissektoren.

Gemäß einem weiteren Aspekt der Erfindung wird beschrieben ein optisches Abbildungssystem zum Erfassen der dreidimensionalen Struktur eines zu erfassenden Objekts. Das beschriebene optische Abbildungssystem weist auf (a) eine Lichtquelle zum Aussenden eines Beleuchtungslichts und (b) eine Lochscheibe gemäß einem der vorangehenden Ansprüche, welche Lochscheibe durch ihren zumindest einen optischen Durchgang einzelne Lichtstrahlen des Beleuchtungslichts selektiert und andere Lichtstrahlen des Beleuchtungslichts durch das optisch absorbierende Material absorbiert. Wenn sich das zu erfassende Objekt in einem räumlichen Erfassungsbereich des optischen Abbildungssystems befindet, treffen die selektierten Lichtstrahlen auf die Oberfläche des Objektes und werden an dieser gestreut, wobei zumindest ein Teil der gestreuten Lichtstrahlen als ein Messlicht durch den zumindest einen optischen Durchgang hindurch dringt. Das beschriebene optische Abbildungssystem weist ferner auf (c) einen Lichtdetektor zum Empfangen des Messlichts.

Dem hier beschriebenen optischen Abbildungssystem liegt die Erkenntnis zugrunde, dass die vorstehend beschriebene Lochscheibe aufgrund ihrer extrem starken Absorption einen wesentlichen Betrag dazu leisten kann, die Menge bzw. die Intensität an Störlicht, welches auf den Lichtdetektor trifft, auf ein Minimum zu reduzieren.

Der Ausdruck "Selektieren von Lichtstrahlen" ist in diesem Dokument dahingehend zu verstehen, dass nur diejenigen Lichtstrahlen für eine Erzeugung von Messsignalen verwendet werden, welche durch den zumindest einen optischen Durchgang hindurchtreten. Dies bedeutet, dass nicht selektierte Lichtstrahlen von dem Lichtdetektor ferngehalten werden und damit nicht zu dem eigentlichen Messsignal beitragen.

Gemäß einem Ausführungsbeispiel der Erfindung weist das optische Abbildungssystem ferner auf (a) eine erste Optik, welche sich in einem ersten optischen Pfad zwischen (i) der Lichtquelle und/oder dem Lichtempfänger und (ii) der Lochscheibe befindet; und (b) eine zweite Optik, welche sich in einem zweiten optischen Pfad zwischen (i) der Lochscheibe und (ii) dem räumlichen Erfassungsbereich des optischen Abbildungssystems befindet.

Die erste Optik und/oder die zweite Optik, welche jeweils eine oder mehrere optische Elemente wie beispielsweise Linsen, Spiegel, Prismen, etc. aufweisen kann bzw. können, können in Bezug zu der Lochscheibe derart angeordnet sein und/oder eine derartige Fokussierungswirkung, insbesondere durch Lichtbrechung, haben, dass sich die Lochscheibe in einem Fokuspunkt der Lichtstrahlen des Beleuchtungslicht und/oder des Messlicht befindet. Ferner können die Lichtquelle und der Lichtdetektor konfokal zueinander angeordnet werden. Dies bedeutet, dass durch die erste Optik (i) zum einen ein Lichtpunkt der Lichtquelle scharf auf eine Ebene abgebildet wird, in der sich die zumindest eine Aussparung der Lochscheibe befindet, und (ii) zum anderen die (Ränder der) Aussparung scharf auf den Lichtempfänger abgebildet werden. Der erste optische Pfad und der zweite optische Pfad definieren dabei jeweils zumindest einen Teil eines optischen Weges, entlang dessen sowohl das Beleuchtungslicht als auch das Messlicht propagiert.

Mit dem gemäß dem hier beschriebenen Ausführungsbeispiel definierten optischen Abbildungssystem kann ein konfokales Mikroskop realisiert werden, welches aufgrund der extrem hohen Absorption durch das optisch absorbierende Material der Lochscheibe ein hohes Signal-zu-Rausch Verhältnis zeigt und damit eine hohe Messgenauigkeit hat, insbesondere für eine Bestimmung von 3D Oberflächentopographien.

Gemäß einem weiteren Ausführungsbeispiel der Erfindung weist das optische Abbildungssystem ferner auf einen Drehantrieb mit einer stationären Komponente und einer drehbaren Komponente, wobei die Lochscheibe mechanisch an die drehbare Komponente angebunden ist. Dabei kann die stationäre Komponente auch als Stator und die drehbare Komponente auch als Rotor des Drehantriebs bezeichnet werden. Die Drehung erfolgt insbesondere um eine Drehachse, welche senkrecht zu der flächigen Ausdehnung der Lochscheibe bzw. parallel zu einem Normalenvektor der Lochscheibe orientiert ist.

Durch eine Drehung der Lochscheibe können sequenziell mit jedem einzelnen optischen Durchgang mehrere Punkte auf der Oberfläche des zu erfassenden Objektes abgetastet werden. Durch eine dem Lichtdetektor nachgeschaltete Datenverarbeitungseinrichtung können die entsprechenden Messsignale, die jeweils einer (Winkel)Position eines optischen Durchgangs und dessen radialem Abstand von der Drehachse zugeordnet sind, zu einem Bild des zu erfassenden Objektes zusammengesetzt werden, welches eine 3D Oberflächentopographie des Objektes darstellt.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieses Dokuments sind lediglich als schematisch und als nicht maßstabsgetreu anzusehen.

Kurze Beschreibung der Zeichnung

Figur 1 zeigt ein konfokales optisches Abbildungssystem mit einer drehbaren Lochscheibe zum Vermessen der dreidimensionalen Oberfläche eines Objektes, wobei die Lochscheibe ein Substrat und ein darauf aufgebrachtes optisch absorbierendes Material mit Kohlenstoff-Nanoröhren aufweist.

Figur 2 zeigt eine als Nipkov-Scheibe ausgebildete Lochscheibe mit einem optischen Fenster zum Aufnehmen eines zweidimensionalen Bildes eines Objekts durch die Lochscheibe hindurch.

Figur 3 zeigt in einer Querschnittsansicht einen Ausschnitt einer Lochscheibe.

Figur 4 zeigt eine Lochscheibe mit einer Vielzahl von optischen Durchgängen, wobei die Anzahl an optischen Durchgängen bei einem größeren radialen Abstand von einem Mittelpunkt der Lochscheibe größer ist als die Anzahl an optischen Durchgängen bei einem kleineren radialen Abstand.

Detaillierte Beschreibung

Es wird darauf hingewiesen, dass in der folgenden detaillierten Beschreibung Merkmale bzw. Komponenten von unterschiedlichen Ausführungsformen, die mit den entsprechenden Merkmalen bzw. Komponenten von einer anderen Ausführungsform nach gleich oder zumindest funktionsgleich sind, mit den gleichen Bezugszeichen oder mit Bezugszeichen versehen sind, welche in den letzten beiden Ziffern identisch sind mit den Bezugszeichen von entsprechenden gleichen oder zumindest funktionsgleichen Merkmalen bzw. Komponenten. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

Außerdem wird darauf hingewiesen, dass raumbezogene Begriffe, wie beispielsweise "vorne" und "hinten", "oben" und "unten", "links" und "rechts", etc. verwendet werden, um die Beziehung eines Elements zu einem anderen Element oder zu anderen Elementen zu beschreiben, wie in den Figuren veranschaulicht. Demnach können die raumbezogenen Begriffe für Ausrichtungen gelten, welche sich von den Ausrichtungen unterscheiden, die in den Figuren dargestellt sind. Es versteht sich jedoch von selbst, dass sich alle solchen raumbezogenen Begriffe der Einfachheit der Beschreibung halber auf die in den Zeichnungen dargestellten Ausrichtungen beziehen und nicht unbedingt einschränkend sind, da die jeweils dargestellte Vorrichtung, Komponente etc., wenn sie in Verwendung ist, Ausrichtungen annehmen kann, die von den in der Zeichnung dargestellten Ausrichtungen verschieden sein können.

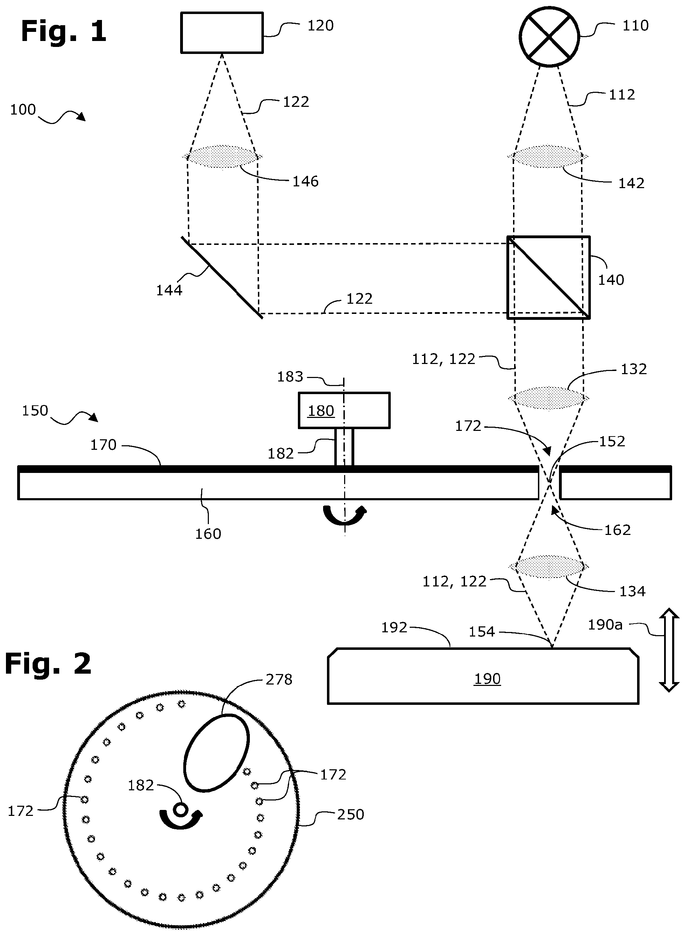

**Figur 1** zeigt ein konfokales optisches Abbildungssystem 100 zum dreidimensionalen Vermessen einer Oberfläche 192 eines Objektes 190. Das optische Abbildungssystem 100 weist eine Lochscheibe 150 auf, welche sich in einem gemeinsamen ersten Fokuspunkt 152 sowohl (i) eines Beleuchtungslichts 112 als auch (ii) eines Messlichts 122 befindet. Genauer wird der gemeinsame erste Fokuspunkt 152 durch den räumlichen Verlauf bzw. der Fokussierung der betreffenden Lichtstrahlen des Beleuchtungslichts 112 bzw. des Messlicht 122 definiert. Der erste Fokuspunkt 152 befindet sich dabei an der Stelle, an welcher der Querschnitt (der Lichtstrahlen) des Beleuchtungslicht 112 sowie des Messlicht 122 am kleinsten ist.

Das Beleuchtungslicht 112 wird von einer Lichtquelle 110 generiert. Gemäß dem hier dargestellten Ausführungsbeispiel wird das Beleuchtungslicht 112 zunächst von einer Optik 142, beispielsweise eine einfache Linse, in ein paralleles Lichtbündel transformiert. Dieses Lichtbündel durchläuft dann (in gerader Richtung) einen Strahlteiler 140, bevor es von einer ersten Optik 132 auf den genannten ersten Fokuspunkt 152 fokussiert wird. Eine als eine Lochblende wirkende Durchgangsöffnung 162 sorgt dafür, dass nur diejenigen Lichtstrahlen die Lochscheibe 150 mit einer signifikanten Intensität passieren, welche in dem ersten Fokuspunkt 152 fokussiert sind. Nach diesem ersten Fokuspunkt 152 weitet sich das Lichtbündel des Beleuchtungslichts 112 wieder auf und trifft auf eine zweite Optik 134. Die zweite Optik 134, welche ebenfalls eine einfache Linse sein kann, fokussiert das Beleuchtungslicht 112 auf einen zweiten Fokuspunkt 154, welcher sich in der Nähe der zu vermessenden Oberfläche 192 befindet.

Das auf das Objekt 190 auftreffende Beleuchtungslicht 112 wird an der Oberfläche 192 des Objektes 190 zumindest teilweise gestreut. Von diesem Streulicht erreicht lediglich ein vergleichsweise geringer Teil als Messlicht 122 einen Lichtdetektor 120. Dabei verläuft der optische Strahlengang dieses (zurückgestreuten) Messlichts 122 zunächst über (a) die zweite Optik 134, (b) die durch die Durchgangsöffnung 162 definierte Lochblende in der Lochscheibe 150 und (c) die erste Optik 132. Danach trifft das Messlicht 122, welches durch die erste Optik 132 in ein paralleles Strahlenbündel transformiert worden ist, auf den Strahlteiler 140. Durch diesen Strahlteiler wird das parallele Messlicht 122 um 90° abgelenkt, sodass es auf einen Reflektor 144 trifft, welcher beispielsweise ein schräggestellter Spiegel ist. An dem Reflektor 144 wird das parallele Messlicht 122 erneut um 90° umgelenkt und trifft dabei auf eine Optik 146, welche das Messlicht auf einen bestimmten Messpunkt bzw. ein bestimmtes Pixel des Lichtdetektors 120 lenkt.

Während der Messung wird gemäß dem hier dargestellten Ausführungsbeispiel das Objekt 190 entlang einer Verschieberichtung 190a (relativ zu dem optischen Abbildungssystem 100) hin und her bewegt. Alternativ kann auch die zweite Optik 134 (relativ zu den anderen Komponenten des optischen Abbildungssystems 100) bewegt oder verstellt werden. Ferner kann auch das gesamte konfokale Abbildungssystem 100 relativ zu dem Objekt 190 bewegt werden. Die entsprechende Verschiebebewegung ist mit einem Doppelpfeil 190a illustriert. Eine (oszillierende) Verschiebung des Objekts 190 um den zweiten Fokuspunkt 154 herum hat zur Folge, dass das Strahlenbündel des Beleuchtungslichts 112 mit einem unterschiedlichen Querschnitt auf die Oberfläche 192 trifft. Aufgrund der optisch konfokalen Anordnung gilt hinsichtlich der Intensität des von der Oberfläche 192 zurückgestreuten Messlichts 122 bzw. genauer der Intensität des Messlichts 122, welches auf den Lichtdetektor 120 trifft, dass diese Intensität dann am größten ist, wenn der zweite Fokuspunkt 154 genau mit einem Punkt der Oberfläche 192 zusammenfällt. Trifft das Strahlenbündel des Messlichts 112 mit einem vergrößerten Querschnitt auf die Oberfläche 192 auf, so ist der Anteil von an der Oberfläche 192 zurückgestreutem Licht, welcher Anteil durch die Aussparung bzw. den optischen Durchgang 172 der Lochscheibe 150 hindurch tritt und als Messlicht 122 auf den Lichtdetektor 120 trifft, entsprechend geringer. Durch eine Auswertung der Intensität des erfassten Messlichts 122 als Funktion des Abstandes zwischen dem Objekt 190 und der Lochscheibe 150 kann die Höhenlage bzw. der Abstand des betreffenden Messpunktes der Oberfläche 192 in Bezug auf das optische Abbildungssystem 100 bestimmt werden. Durch eine Drehung der Lochscheibe 150 um die Drehachse 183 können verschiedene Messpunkte auf der Oberfläche 192 erfasst und somit das dreidimensionale Höhenprofil der Oberfläche 192 vermessen werden.

Auch bei einer sorgfältigen Auswahl sowie Positionierung aller beteiligten optischen Komponenten ist es nicht möglich, zu 100 % zu verhindern, dass auf den Lichtdetektor 120 unerwünschtes Störlicht trifft. Ein besonders stark störendes Störlicht entsteht dadurch, dass außerhalb der Durchgangsöffnung 162 auf die Lochscheibe 150 auftreffendes Beleuchtungslicht 112 zurück reflektiert wird und über die optischen Komponenten erste Optik 132, Strahlteiler 140, Reflektor 144 und Optik 146 auf den Lichtdetektor 120 trifft.

Die Intensität dieses Streulicht wird auf effektive Weise dadurch auf ein Minimum reduziert, dass die in Figur 1 obere Oberfläche der Lochscheibe 150 mit einem besonders stark optisch absorbierenden Material 170 versehen ist, welches einen Absorptionskoeffizienten von zumindest 98 % aufweist. Gemäß dem hier dargestellten Ausführungsbeispiel ist das optisch absorbierende Material 170 auf einem Substrat 160 aufgebracht, welches aus einem Halbleitermaterial, insbesondere Silizium, besteht. Die vorstehend beschriebene Lochblende der Lochscheibe 150 wird dadurch realisiert, dass in dem optisch absorbierenden Material 170 eine Aussparung 172 vorhanden ist, welche räumlich mit der vorstehend genannten Durchgangsöffnung 162 zusammenfällt. Die Aussparung 172 und die Durchgangsöffnung 162 definieren damit einen optischen Durchgang, welcher die vorstehend beschriebene Lochblende darstellt.

Gemäß dem hier dargestellten Ausführungsbeispiel enthält das optisch absorbierende Material 170 Kohlenstoff-Nanoröhren, welche zu einer besonders hohen optischen Absorption an der Oberseite der Lochscheibe 150 führen. Um diese Absorption weiter zu erhöhen, sind die Kohlenstoff-Nanoröhren in nicht dargestellte Weise entlang einer Vorzugsrichtung ausgerichtet, welche parallel zu einem Normalenvektor der Oberfläche der Lochscheibe 150 orientiert ist.

Die Lochscheibe 150 ist, wie vorstehend bereits erwähnt und wie von herkömmlichen konfokalen optischen Abbildungssystemen bekannt, um eine Drehachse 183 drehbar. Zu diesem Zweck ist die Lochscheibe 150 über einen Schaft 182 mit einem Drehantrieb 180 verbunden. Bei einer Aktivierung des Drehantriebs dreht sich die Lochscheibe 150 um die Drehachse 183. Dadurch "wandert" der optische Durchgang 162, 172 in einer Ebene senkrecht zu der Drehachse 133, so dass in bekannter Weise verschiedene Oberflächenpunkte des Objekts 190 abgetastet bzw. genauer deren Abstand zu der Lochscheibe 150 vermessen werden können.

Es wird darauf hingewiesen, dass in Abweichung zu dem strukturellen Aufbau des in Figur 1 dargestellten konfokalen optischen Abbildungssystems 100 folgende Modifikationen vorgenommen werden können:

(A) Das Beleuchtungslicht wird nicht fokussiert sondern als ein zumindest annähernd paralleles Lichtbündel auf die Lochscheibe gerichtet. Dies bedeutet, dass das Beleuchtungslicht bei einem bestimmten Objektabstand nicht auf die Oberfläche des Objekts fokussiert wird, sondern einen mehr oder weniger großen Beleuchtungsfleck auf der Objektoberfläche erzeugt.

(B) Das Beleuchtungslicht wird über den Strahlteiler in den Strahlengang des Messlichts eingekoppelt. In entsprechender Weise durchdringt das auf den Lichtdetektor treffende Messlicht den Strahlteiler ohne eine Ablenkung (um 90°). Anschaulich ausgedrückt sind dann in Bezug auf Figur 1 die Lichtquelle 110 und Lichtdetektor 120 in Bezug auf ihre räumliche Anordnung vertauscht.

Figur 2 zeigt eine als sog. Nipkov-Scheibe ausgebildete Lochscheibe 250 mit einem optischen Fenster 278 zum Aufnehmen eines zweidimensionalen Bildes eines Objekts durch die Lochscheibe 250 hindurch. Die Lochscheibe 250 weist (in bekannter Weise) eine Mehrzahl von optischen Durchgängen 172 auf, die jeweils als eine kleine Lochblende dienen und auf einer Spirale um einen Mittelpunkt der Lochscheibe 250 angeordnet sind. In Figur 2 fällt dieser Mittelpunkt mit dem Schaft 182 zusammen.

Gemäß dem hier dargestellten Ausführungsbeispiel weist die Lochscheibe 250 zusätzlich zu der Mehrzahl von optischen Durchgängen 172 ein vergleichsweise großes optisches Fenster 278 auf. Durch dieses optische Fenster hindurch kann zumindest ein Teil des betreffenden Objektes mittels einer 2D Bildaufnahme erfasst werden. Dadurch kann anhand eines einfachen Bildes des Objektes oder zumindest eines Teiles des betreffenden Objektes verifiziert werden, dass sich das zu erfassende Objekt bzw. der zu erfassende Teilbereich des Objektes an einer korrekten Stelle befindet, sodass auch tatsächlich der richtige Oberflächenbereich des Objekts in der vorstehend beschriebenen Art und Weise dreidimensional vermessen wird.

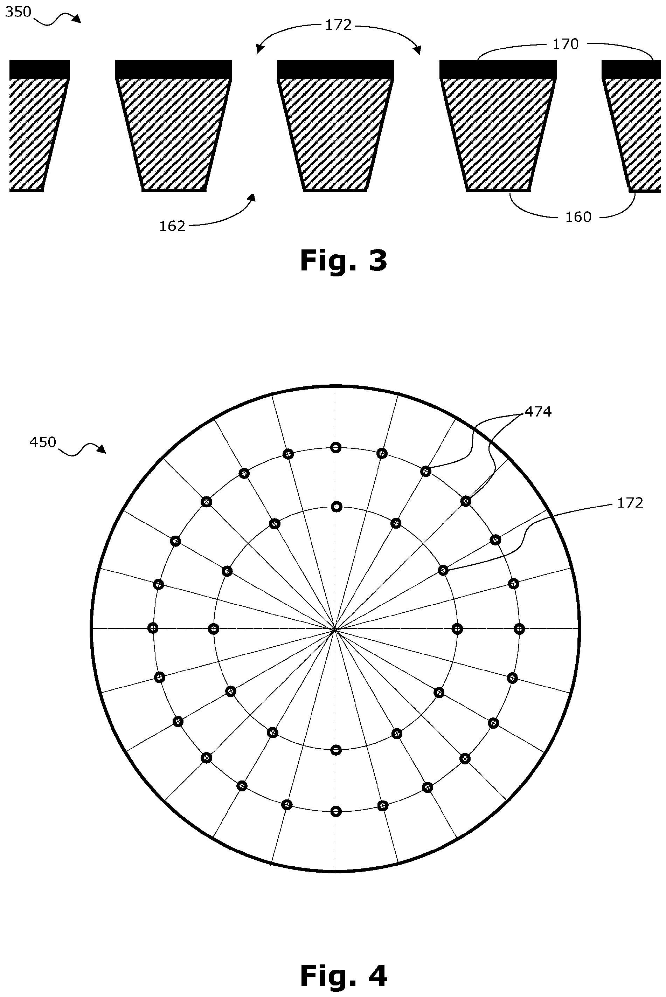

**Figur 3** zeigt in einer Querschnittsansicht einen Ausschnitt einer Lochscheibe 350 gemäß einem weiteren Ausführungsbeispiel der Erfindung. Auch die Lochscheibe 350 umfasst ein Substrat 160 sowie eine auf dem Substrat 160 ausgebildete Schicht aus einem optisch stark absorbierenden Material 170. Geeignet ausgerichtete Kohlenstoff-Nanoröhren in dem optisch absorbierenden Material 170 sorgen für eine besonders hohe Absorption an der Oberseite der Lochscheibe 350. Um zusätzlich eine unerwünschte Erzeugung von Störlicht durch eine Streuung an den Seitenwänden der optischen Durchgänge 162, 172 zu vermeiden, weisen die optischen Durchgänge 162,172 eine konische Form auf. Dabei ist der Querschnitt der optischen Durchgänge 162, 172 an derjenigen Seite, an der sich das optisch absorbierende Material 170 befindet, kleiner ist als der Querschnitt an der gegenüberliegenden Seite der Lochscheibe 350. Alternativ oder in Kombination kann das optisch absorbierende Material auch an derjenigen Seite des Substrats angebracht sein, an der die konischen optischen Durchgänge den größeren Querschnitt aufweisen.

**Figur 4** zeigt eine Lochscheibe 450 mit einer Vielzahl von optischen Durchgängen 172 und einer Vielzahl an weiteren optischen Durchgängen 474. Gemäß dem hier dargestellten Ausführungsbeispiel sind die weiteren optischen Durchgänge 474 von einem Mittelpunkt der Lochscheibe 450 weiter beabstandet als die optischen Durchgänge 172. Um zu verhindern, dass eine räumliche Dichte an optischen Durchgängen in einem radial äußeren Teil der Lochscheibe 150 deutlich kleiner ist als in einem radial inneren Teil der Lochscheibe 150, ist die Anzahl an (äußeren) weiteren optischen Durchgängen 474 höher als die Anzahl an (inneren) optischen Durchgängen 172. Um dies zu verdeutlichen, sind in Figur 4 von dem Mittelpunkt der Lochscheibe 450 radial ausgehende Hilfslinien eingezeichnet, aus denen ersichtlich ist, dass der Winkelabstand zwischen zwei benachbarten (inneren) optischen Durchgängen 172 doppelt so groß ist wie der Winkelabstand zwischen zwei benachbarten (äußeren) weiteren optischen Durchgänge 474. Dies bedeutet, dass gemäß dem hier dargestellten Ausführungsbeispiel die Anzahl der (äußeren) weiteren optischen Durchgänge 474 doppelt so hoch ist wie die Anzahl der (inneren) optischen Durchgänge 172. Durch eine solche "nicht sternförmige" räumliche Verteilung der optischen Durchgänge 172, 474 kann ohne eine Einbuße an räumlicher Auflösung für größere radiale Abstände während einer Umdrehung der Lochscheibe 450 eine größere oder zumindest gleich große Menge an Licht "eingesammelt" werden, bezogen auf die (inneren) optischen Durchgänge 172. Dadurch können von dem in Figur 1 dargestellten Lichtdetektor 120 Messsignale mit einem großen und in dem Sichtfeld der konfokalen Abbildung zumindest annähernd gleichen Signal-zu-Rausch Verhältnis aufgenommen werden.

Alternativ zu oder in Kombination mit einer solchen vom radialen Abstand zum Mittelpunkt der Lochscheibe abhängigen Verteilung der Anzahl an optischen Durchgängen kann auch die Größe bzw. der Durchmesser der optischen Durchgänge räumlich variieren und insbesondere von dem radialen Abstand zum Mittelpunkt der Lochscheibe abhängen. So können beispielsweise die Durchmesser der optischen Durchgänge für äußere Durchgänge größer sein als für innere Durchgänge.

Es wird angemerkt, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

Bezugszeichen:

| | |
|---|---|
| 100 | konfokales optisches Abbildungssystem |
| 110 | Lichtquelle |
| 112 | Beleuchtungslicht |
| 120 | Lichtdetektor |
| 122 | Messlicht |
| 132 | erste Optik |
| 134 | zweite Optik |
| 140 | Strahlteiler |
| 142 | Optik |
| 146 | Optik |
| 150 | Lochscheibe |
| 152 | erster Fokuspunkt |
| 154 | zweiter Fokuspunkt |
| 160 | Substrat |
| 162 | Durchgangsöffnung / optischer Durchgang |
| 170 | optisch absorbierendes Material |

| 172 | Aussparung / optischer Durchgang |
| 180 | Drehantrieb |
| 182 | Schaft |
| 183 | Drehachse |
| 190 | (zu erfassendes) Objekt |
| 190a | Verschiebebewegung |
| 192 | Oberfläche |
| 250 | Lochscheibe |
| 278 | optisches Fenster |
| 350 | Lochscheibe |
| 450 | Lochscheibe |
| 474 | weitere Aussparung / weiterer optischer Durchgang |

**Patentansprüche**

1. Lochscheibe (150, 250, 350, 450) zum Selektieren von Licht für eine optische Abbildung in einem konfokalen Abbildungssystem (100), die Lochscheibe aufweisend

   ein optisch absorbierendes Material (170), welches einen Absorptionskoeffizienten von zumindest 98 % hat, wobei in dem optisch absorbierenden Material (170) zumindest eine Aussparung (172) vorhanden ist, welche einen optischen Durchgang (172) durch die Lochscheibe definiert; und
   ein Substrat (160),
   wobei das optisch absorbierende Material (170) eine Beschichtung auf dem Substrat (160) ist, und
   wobei das Substrat (160) im Bereich der zumindest einen Aussparung (172) eine Durchgangsöffnung (162) aufweist.

2. Lochscheibe gemäß Anspruch 1, wobei das Substrat (160) ein optisch transparentes Substrat (160) ist.

3. Lochscheibe gemäß Anspruch 1 oder 2, wobei das Substrat (160) ein Halbleitermaterial aufweist, wobei insbesondere das Halbleitermaterial Silizium ist.

4. Lochscheibe gemäß einem der vorangehenden Ansprüche, wobei die Durchgangsöffnung (162) entlang einer Richtung parallel zu einem Normalenvektor der Lochscheibe einen sich stetig oder diskret verändernden Öffnungsquerschnitt aufweist, wobei insbesondere die Durchgangsöffnung (162) die Form eines Kegelstumpfes aufweist.

5. Lochscheibe gemäß dem vorangehenden Anspruch, wobei zumindest eine Seitenwand der Durchgangsöffnung (162) gegenüber der Oberfläche der Lochscheibe so stark geneigt ist, dass an dieser Seitenwand keine unerwünschten Beschneidungen, Reflexionen oder Streuungen von Lichtstrahlen (122) stattfinden, welche die entsprechende Aussparung (172) der Lochscheibe passieren.

6. Lochscheibe gemäß einem der vorangehenden Ansprüche, wobei die zumindest eine Aussparung (172) eine Breite zwischen 1 µm und 30 µm und insbesondere eine Breite zwischen 2 µm und 10 µm hat, und/oder wobei der Absorptionskoeffizient größer als 99%, insbesondere größer als 99,5 % und weiter insbesondere größer als 99,95 % ist.

7. Lochscheibe gemäß einem der vorangehenden Ansprüche, wobei das optisch absorbierende Material Kohlenstoff-Nanoröhren aufweist, wobei insbesondere die Kohlenstoff-Nanoröhren entlang einer Vorzugsrichtung ausgerichtet sind, wobei die Vorzugsrichtung insbesondere parallel zu einem Normalenvektor der Lochscheibe orientiert ist.

8. Lochscheibe gemäß einem der vorangehenden Ansprüche, ferner aufweisend zumindest eine weitere Aussparung (474), wobei die weitere Aussparung (474) einen weiteren optischen Durchgang (474) definiert, welcher größer ist als der optische Durchgang (172).

9. Lochscheibe gemäß einem der vorangehenden Ansprüche, wobei eine Vielzahl von optischen Durchgängen (172, 474) vorhanden sind, die in Bezug auf einen Mittelpunkt der Lochscheibe unterschiedliche radiale Abstände haben, wobei (a) für einen ersten radialen Abstand zwei benachbarte erste optische Durchgänge (172) in Bezug auf den Mittelpunkt einen ersten Winkelabstand haben und

   (b) für einen zweiten radialen Abstand zwei benachbarte zweite optische Durchgänge (474) in Bezug auf den Mittelpunkt einen zweiten Winkelabstand haben, wobei wenn der erste Abstand größer ist als der zweite Abstand, der erste Winkelabstand kleiner ist als der zweite Winkelabstand.

10. Lochscheibe gemäß einem der vorangehenden Ansprüche, wobei die optischen Durchgänge (172, 474) derart räumlich über die Lochscheibe verteilt angeordnet sind, dass über ein vorgegebenes Sichtfeld der konfokalen optischen Abbildung ein zumindest annähernd gleiches Signal-zu-Rausch Verhältnis erzielbar ist.

11. Lochscheibe gemäß einem der vorangehenden Ansprüche,

ferner aufweisend

zumindest ein optisches Fenster (278), welches so groß ist, dass zumindest ein Teilbereich eines zu erfassenden Objekts (190) durch das optische Fenster (278) hindurch auf eine Kamera (120) abbildbar ist, wobei der abbildbare Teilbereich des Objekts (190) größer ist als ein Bereich des Objekts (190), welcher Bereich durch den optischen Durchgang (172) erfassbar ist.

12. Lochscheibe gemäß einem der vorangehenden Ansprüche, wobei

die Lochscheibe eine Vielzahl von Aussparungen (172) und zumindest drei unterschiedliche Kreissektoren aufweist, wobei

in einem ersten Kreissektor die Aussparungen (172) mit einer ersten räumlichen Verteilung angeordnet sind,

in einem zweiten Kreissektor die Aussparungen (172) mit einer zweiten räumlichen Verteilung angeordnet sind, und

in dem dritten Kreissektor die Aussparungen (172) mit einer dritten räumlichen Verteilung angeordnet sind, wobei

entlang einer Umfangsrichtung der Lochscheibe sich der zweite Kreissektor zwischen dem ersten Kreissektor und dem dritten Kreissektor befindet und die erste räumliche Verteilung und die dritte räumliche Verteilung unterschiedlich sind zu der zweiten räumlichen Verteilung und insbesondere die erste räumliche Verteilung gleich ist wie die dritte räumliche Verteilung.

13. Optisches Abbildungssystem (100) zum Erfassen der dreidimensionalen Struktur eines Objekts (190), das optische Abbildungssystem (100) aufweisend

eine Lichtquelle (110) zum Aussenden eines Beleuchtungslichts (112);

eine Lochscheibe (150, 250, 350, 450) gemäß einem der vorangehenden Ansprüche, welche Lochscheibe (150, 250, 350, 450) durch ihren zumindest einen optischen Durchgang (172) einzelne Lichtstrahlen des Beleuchtungslichts (112) selektiert und andere Lichtstrahlen des Beleuchtungslichts (112) durch das optisch absorbierende Material (170) absorbiert, wobei, wenn sich das zu erfassende Objekt (190) in einem räumlichen Erfassungsbereich des optischen Abbildungssystems (100) befindet, die selektierten Lichtstrahlen auf die Oberfläche (192) des Objekts (190) treffen und an dieser gestreut werden, wobei zumindest ein Teil der gestreuten Lichtstrahlen als ein Messlicht (122) durch den zumindest einen optischen Durchgang (172) hindurch dringt; und

einen Lichtdetektor (120) zum Empfangen des Messlichts (122).

14. Optisches Abbildungssystem (100) gemäß dem vorangehenden Anspruch, ferner aufweisend

eine erste Optik (132), welche sich in einem ersten optischen Pfad zwischen (i) der Lichtquelle (110) und/oder dem Lichtempfänger (120) und (ii) der Lochscheibe (150, 250, 350, 450) befindet; und

eine zweite Optik (134), welche sich in einem zweiten optischen Pfad zwischen (i) der Lochscheibe (150, 250, 350, 450) und (ii) dem räumlichen Erfassungsbereich des optischen Abbildungssystems (100) befindet,

und/oder ferner aufweisend

einen Drehantrieb (180) mit einer stationären Komponente und einer drehbaren Komponente, wobei die Lochscheibe (150, 250, 350, 450) mechanisch an die drehbare Komponente angebunden ist.

## Claims

1. A perforated disk (150, 250, 350, 450) for selecting light for an optical imaging in a confocal imaging system (100), the perforated disk having

an optically absorbing material (170) which has an absorption coefficient of at least 98%, wherein at least one opening (172) is present in the optically absorbing material (170) and defines an optical passage (172) through the perforated disk; and

a substrate (160),

wherein the optically absorbing material (170) is a coating on the substrate (160), and

wherein the substrate (160) has a passage opening (162) in the region of the at least one opening (172).

2. A perforated disk according to claim 1, wherein the substrate (160) is an optically transparent substrate (160).

3. A perforated disk according to claim 1 or 2, wherein the substrate (160) has a semiconductor material, wherein in particular the semiconductor material is silicon.

4. A perforated disk according to any one of the preceding claims, wherein

the passage opening (160) has an opening cross-section, which changes continuously or discretely along a direction parallel to a normal vector of the perforated disk, wherein in particular the passage opening (162) has the shape of a truncated cone.

5. A perforated disk according to the preceding claim, wherein
at least one sidewall of the passage opening (162) is inclined so strongly with respect to the surface of the perforated disk that no undesired blockings (vignettings), reflections or scatterings of light beams (122), which pass through the corresponding opening (172) of the perforated disk, occur at this sidewall.

6. A perforated disk according to any one of the preceding claims, wherein the at least one opening (172) has a width between 1 μm and 30 μm, and in particular a width between 2 μm and 10 μm, and/or wherein
the absorption coefficient is greater than 99%, in particular greater than 99.5%, and further in particular greater than 99.95%.

7. A perforated disk according to any one of the preceding claims, wherein the optically absorbing material has carbon nanotubes, wherein in particular the carbon nanotubes are oriented along a preferred direction, wherein the preferred direction is in particular aligned parallel to a normal vector of the perforated disk.

8. A perforated disk according to any one of the preceding claims,
further having
at least one further opening (474), wherein the further opening (474) defines a further optical passage (474) which is greater than the optical passage (172).

9. A perforated disk according to any one of the preceding claims, wherein a plurality of optical passages (172, 474) are present, which have different radial distances with respect to a center point of the perforated disk, wherein (a) for a first radial distance, two neighboring first optical passages (172) have a first angular distance with respect to the center point, and

(b) for a second radial distance, two neighboring second optical passages (474) have a second angular distance with respect to the center point, wherein
if the first distance is greater than the second distance, the first angular distance is smaller than the second angular distance.

10. A perforated disk according to any one of the preceding claims, wherein the optical passages (172, 474) are arranged spatially distributed over the perforated disk such that an at least approximately equal signal-to-noise ratio is achievable across a predefined field of view of the confocal optical imaging.

11. A perforated disk according to any one of the preceding claims,
further having
at least one optical window (278), which is so large that at least a part region of an object (190) to be captured can be imaged through the optical window (278) onto a camera (120), wherein the imageable part region of the object (190) is larger than a region of the object (190), which region can be captured through the optical passage (172).

12. A perforated disk according to any one of the preceding claims, wherein the perforated disk has a plurality of openings (172) and at least three different sectors of a circle, wherein,

in a first sector, the openings (172) are arranged with a first spatial distribution, in a second sector, the openings (172) are arranged with a second spatial distribution, and,
in the third sector, the openings (172) are arranged with a third spatial distribution, wherein, along a circumferential direction of the perforated disk, the second sector is located between the first sector and the third sector, and the first spatial distribution and the third spatial distribution are different from the second spatial distribution and in particular the first spatial distribution is identical to the third spatial distribution.

13. An optical imaging system (100) for capturing the three-dimensional structure of an object (190), the optical imaging system (100) having

a light source (110) for emitting an illumination light (112);
a perforated disk (150, 250, 350, 450) according to any one of the preceding claims, which perforated disk (150, 250, 350, 450) selects individual light beams of the illumination light (112) through its at least one optical passage (172) and absorbs other light beams of the illumination light (112) by means of the optically absorbing material (170), wherein,
if the object (190) to be captured is located in a spatial capturing region of the optical imaging system (100), the selected light beams impinge on the surface (192) of the object (190) and are scattered at said surface, wherein at least some of the scattered light beams pass through the at least one optical passage (172) as a measurement light (122); and
a light detector (120) for receiving the measurement light (122).

**14.** An optical imaging system (100) according to the preceding claim, further having
a first optics (132) which is located in a first optical path between (i) the light source (110) and/or the light receiver (120) and (ii) the perforated disk (150, 250, 350, 450); and

a second optics (134) which is located in a second optical path between (i) the perforated disk (150, 250, 350, 450) and (ii) the spatial capturing region of the optical imaging system (100),
and/or further having
a rotary drive (180) having a stationary component and a rotatable component, wherein the perforated disk (150, 250, 350, 450) is mechanically tied to the rotatable component.

**Revendications**

**1.** Disque perforé (150, 250, 350, 450) destiné à sélectionner la lumière pour une reproduction optique dans un système d'imagerie confocal (100), le disque perforé comprenant

un matériau optiquement absorbant (170) ayant un coefficient d'absorption d'au moins 98 %, au moins un évidement (172) étant présent dans le matériau optiquement absorbant (170), lequel définit un passage optique (172) à travers le disque perforé ; et
un substrat (160),
le matériau optiquement absorbant (170) étant un revêtement sur le substrat (160), et
le substrat (160) présentant une ouverture de passage (162) dans la zone dudit au moins un évidement (172).

**2.** Disque perforé selon la revendication 1, dans lequel le substrat (160) est un substrat optiquement transparent (160).

**3.** Disque perforé selon la revendication 1 ou 2, dans lequel le substrat (160) comprend un matériau semi-conducteur, en particulier, le matériau semi-conducteur étant du silicium.

**4.** Disque perforé selon l'une des revendications précédentes, dans lequel l'ouverture de passage (162) présente une section transversale d'ouverture variant de manière continue ou discrète le long d'une direction parallèle à un vecteur normal du disque perforé, en particulier, l'ouverture de passage (162) présentant la forme d'un tronc de cône.

**5.** Disque perforé selon la revendication précédente, dans lequel au moins une paroi latérale de l'ouverture de passage (162) est inclinée si fortement par rapport à la surface du disque perforé qu'aucune coupure, réflexion ou diffusion indésirable des rayons lumineux (122), traversant l'évidement correspondant (172) du disque perforé, ne se produit sur cette paroi latérale.

**6.** Disque perforé selon l'une des revendications précédentes,

dans lequel ledit au moins un évidement (172) a une largeur comprise entre 1 μm et 30 μm, et en particulier une largeur comprise entre 2 μm et 10 μm, et/ou
le coefficient d'absorption est supérieur à 99 %, en particulier supérieur à 99,5 %, et en particulier supérieur à 99,95 %.

**7.** Disque perforé selon l'une des revendications précédentes,
dans lequel le matériau optiquement absorbant comprend des nanotubes de carbone, en particulier, les nanotubes de carbone étant orientés selon une direction préférentielle, en particulier, la direction préférentielle étant parallèle à un vecteur normal du disque perforé.

**8.** Disque perforé selon l'une des revendications précédentes,
comprenant en outre au moins un autre évidement (474), l'autre évidement (474) définissant un autre passage optique (474) qui est plus grand que le passage optique (172).

**9.** Disque perforé selon l'une des revendications précédentes,

dans lequel il existe une pluralité de passages optiques (172, 474) qui ont des distances radiales différentes par rapport à un centre du disque perforé, sachant que

(a) pour une première distance radiale, deux premiers passages optiques adjacents (172) ont une première distance angulaire par rapport au centre, et que
(b) pour une deuxième distance radiale, deux deuxièmes passages optiques adjacents (474) ont une deuxième distance angulaire par rapport au centre,

lorsque la première distance est supérieure à la deuxième distance, la première distance angulaire est inférieure à la deuxième distance angulaire.

**10.** Disque perforé selon l'une des revendications précédentes,
dans lequel les passages optiques (172, 474) sont répartis dans l'espace sur le disque perforé de telle sorte qu'un rapport signal/bruit au moins approximativement identique puisse être obtenu sur un champ de vision pré-défini de la reproduction optique confocale.

11. Disque perforé selon l'une des revendications précédentes,
comportant en outre au moins une fenêtre optique (278) qui est suffisamment grande pour qu'au moins une zone partielle d'un objet (190) à détecter puisse être reproduite à travers la fenêtre optique (278) sur une caméra (120), la zone partielle de l'objet (190) susceptible d'être reproduite étant plus grande qu'une zone de l'objet (190) qui peut être détectée à travers le passage optique (172).

12. Disque perforé selon l'une des revendications précédentes,
dans lequel

le disque perforé présente une pluralité d'évidements (172) et au moins trois secteurs circulaires différents,
dans un premier secteur circulaire, les évidements (172) sont disposés selon une première répartition spatiale,
dans un deuxième secteur circulaire, les évidements (172) sont disposés selon une deuxième répartition spatiale, et
dans le troisième secteur circulaire, les évidements (172) sont disposés selon une troisième répartition spatiale,
le deuxième secteur circulaire étant situé entre le premier secteur circulaire et le troisième secteur circulaire le long d'une direction circonférentielle du disque perforé, et la première répartition spatiale et la troisième répartition spatiale étant différentes de la deuxième répartition spatiale, et en particulier, la première répartition spatiale étant identique à la troisième répartition spatiale.

13. Système d'imagerie optique (100) pour détecter la structure tridimensionnelle d'un objet (190), le système d'imagerie optique (100) comprenant une source lumineuse (110) pour émettre une lumière d'éclairage (112) ;

un disque perforé (150, 250, 350, 450) selon l'une des revendications précédentes, lequel disque perforé (150, 250, 350, 450) sélectionne, par son au moins un passage optique (172), des rayons lumineux individuels de la lumière d'éclairage (112) et absorbe d'autres rayons lumineux de la lumière d'éclairage (112) par le matériau optiquement absorbant (170), sachant que lorsque l'objet (190) à détecter se trouve dans une zone de détection spatiale du système d'imagerie optique (100), les rayons lumineux sélectionnés frappent la surface (192) de l'objet (190) et sont diffusés sur celle-ci, et au moins une partie des rayons lumineux diffusés pénètre sous forme de lumière de mesure (122) à travers ledit au moins un passage optique (172) ; et
un détecteur de lumière (120) pour recevoir la lumière de mesure (122).

14. Système d'imagerie optique (100) selon la revendication précédente, comprenant en outre

une première optique (132) qui se trouve dans un premier chemin optique entre (i) la source lumineuse (110) et/ou le récepteur de lumière (120) et (ii) le disque perforé (150, 250, 350, 450) ; et
une deuxième optique (134) qui se trouve dans un deuxième chemin optique entre (i) le disque perforé (150, 250, 350, 450) et (ii) la zone de détection spatiale du système d'imagerie optique (100),
et/ou comprenant en outre
un entraînement rotatif (180) ayant un composant fixe et un composant rotatif, le disque perforé (150, 250, 350, 450) étant relié mécaniquement au composant rotatif.

**Fig. 1**

100

120

122

146

144

122

110

112

142

140

112, 122

132

183

180

182

150

170

172

152

162

160

112, 122

134

192

154

190a

190

**Fig. 2**

278

182

172

172

250

**Fig. 3**

**Fig. 4**

**EP 3 807 619 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007121706 A1
- WO 2017064629 A1